# EUROPEAN PATENT APPLICATION

(11) **EP 2 098 841 A1**
(43) Date of publication of application: **09.09.2009**
(21) Application number: 09151267.3
(22) Date of filing: 23.01.2009
(51) Int. Cl.: G01K 1/14

(54) **Temperature sensor for pipes with elastic fixing means**

(30) Priority: 07.03.2008 IT MI20080385
(71) Applicant: Nordgas S.r.l., 23841 Annone di Brianza (LC) (IT)
(72) Inventor: Invernizzi, Gianmario, 23900, LECCO (IT)
(74) Representative: Modiano, Micaela Nadia

(57) **Abstract**

A pipe temperature sensor (1) with highly functional use, comprising a main base (2) that can be wrapped partially around a pipe (3), temperature sensing means (4) that are associated with the main base (2) and can be arranged proximate to the pipe in order to measure its temperature, elastic fixing means (5) which are associated to the main base (2) and can be wrapped at least partially around the free portion of the pipe (3), the sensor (1) comprising rotation-preventing means which are associated with the fixing means (13) in order to prevent the rotation and sliding of the sensor (1) with respect to the pipe (3).

## Description

The present invention relates to a pipe temperature sensor with highly functional use.

Sensors for measuring the external temperature of pipes are known which generally comprise a main base that can be fixed to a pipe whose temperature is to be measured and contains the sensitive element for performing the measurement.

The sensitive element can comprise a thermistor, which is supported by a printed circuit that ends with a port associated with the main base.

Such known sensors are not devoid of drawbacks, including the fact that the fixing system does not allow to block rotations and sliding of the sensor with respect to the pipe, entailing the possibility of possible unwanted coiling of the wiring connected to the sensor.

The aim of the present invention is to eliminate the drawback noted above by providing a pipe temperature sensor that prevents rotation of the sensor around the pipe to which the sensor is fixed.

Within this aim, an object of the present invention is to provide a sensor that can be uncoupled from the pipe, if needed.

Another object of the present invention is to provide a sensor that uses easily available components.

Still another object of the present invention is to provide a sensor that has a low cost.

This aim and these and other objects that will become better apparent hereinafter are achieved by a pipe temperature sensor with a particular fixing system, comprising a main base that can be wrapped partially around a pipe, temperature sensing means that are associated with said main base and can be arranged proximate to said pipe in order to measure its temperature, elastic fixing means which are associated to said main base and can be wrapped at least partially around the free portion of said pipe, **characterized in that** it comprises rotation-preventing means which are associated with said fixing means in order to prevent the rotation and sliding of said sensor with respect to said pipe.

Further characteristics and advantages of the present invention will become apparent from the description of a preferred but not exclusive embodiment of a sensor according to the invention, illustrated by way of non-limiting example in the accompanying drawings, wherein:

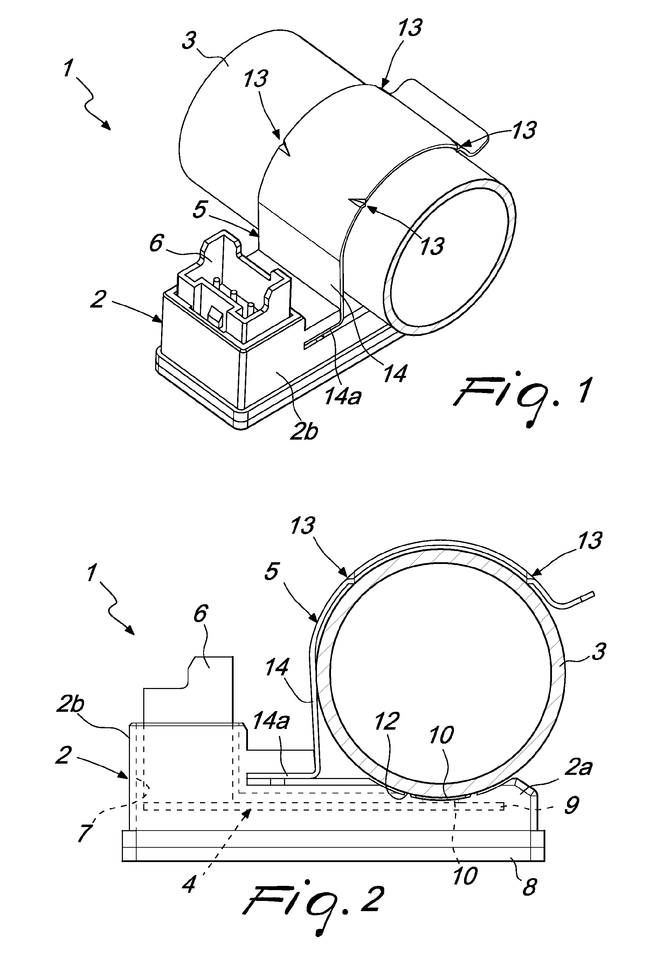

Figure 1 is a perspective view of a pipe temperature sensor according to the present invention, applied to a pipe;
Figure 2 is a sectional view of the sensor and of the pipe shown in Figure 1, taken along a radial plane of the pipe.

With reference to the figures, the pipe temperature sensor with particular fixing system, designated by the reference numeral 1, comprises a main base 2, which can be wrapped partially around a pipe 3, temperature sensing means 4 which are associated with the main base 2 and can be arranged proximate to the pipe 3 to measure its temperature, elastic fixing means 5 associated with the main base 2 which can be wrapped at least partially around the free portion of the pipe 3.

The main base 2 comprises a first portion 2a, which forms a concavity for mating with the pipe 3, and a second portion 2b, which forms a socket 6 for engagement with connector means, not shown in the figure.

The main base 2 comprises a receptacle 7 for accommodating the sensing means 4.

The main base 2 is obtained on the opposite side with respect to the concavity for mating with the pipe 3.

A covering element 8 is provided, which can engage below the main base 2 for its closure on the side of the receptacle 7.

The sensing means 4 comprise at least one printed circuit 9, provided with a thermistor 10 which is covered by a protective plate 11.

The thermistor 10 can face the pipe 3 by means of a through cavity 12 formed by the concavity in the direction of the receptacle 7 at said thermistor 10.

According to the invention, rotation-preventing means 13 are provided which are associated with the fixing means 5 for fixing the sensor 1 to the pipe 3.

The fixing means 5 comprise a clip, which is formed by a substantially arc-like metal strip 14 that is elastically deformable and is fixed, at one of its ends 14a, to the main base 2.

The rotation-preventing means 13 comprise at least one tooth formed on an inner surface of the strip 14 that is directed in the direction of the sensor 1 and can engage the outer surface of the pipe 3.

Operation of the sensor 1 is clear and evident from what has been described.

In particular, it must be noted that once the sensor 1 has been fixed to the pipe 3, such sensor cannot rotate with respect to the pipe 3 thanks to the at least one tooth of the rotation-preventing means 13.

In practice, it has been found that the pipe temperature sensor according to the present invention fully achieves the intended aim and objects, since once it is fixed to the pipe whose outside temperature is to be measured, it cannot rotate with respect to the pipe.

Another advantage of the sensor according to the present invention consists in that easily available components can be used to provide it.

All the details may further be replaced with other technically equivalent elements.

In practice, the materials used, so long as they are compatible with the specific use, as well as the contingent shapes and dimensions, may be any according to requirements and to the state of the art.

The disclosures in Italian Patent Application No. MI2008A000385 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A pipe temperature sensor (1) with highly functional use, comprising a main base (2) that can be wrapped partially around a pipe (3), temperature sensing means (4) that are associated with said main base (2) and can be arranged proximate to said pipe (3) in order to measure its temperature, elastic fixing means (5) which are associated with said main base (2) and can be wrapped at least partially around the free portion of said pipe (3), **characterized in that** it comprises rotation-preventing means (13) which are associated with said fixing means (5) in order to prevent the rotation and sliding of said sensor (1) with respect to said pipe (3).

2. The sensor according to claim 1, **characterized in that** said fixing means (5) comprise a clip formed by a substantially arc-like metal strip (14) which is elastically deformable and is fixed, at one of its ends, to said main base (2).

3. The sensor according to one or more of the preceding claims, **characterized in that** said rotation-preventing means (13) comprise at least one tooth, which is formed on an inner surface of said strip (14) which faces toward said sensor (1) and can be engaged with the outer surface of said pipe (3).

4. The sensor according to one or more of the preceding claims, **characterized in that** said main base (2) comprises a first portion (2a), which forms a concavity for mating with said pipe (3).

5. The sensor according to one or more of the preceding claims, **characterized in that** said main base (2) comprises a receptacle (7) for accommodating said sensing means (4), the receptacle being obtained on the opposite side of said concavity.

6. The sensor according to one or more of the preceding claims, **characterized in that** said sensing means (4) comprise at least one printed circuit (9) that bears a thermistor (10).

7. The sensor according to one or more of the preceding claims,
**characterized in that** said thermistor (10) is covered by a protective plate (11).

8. The sensor according to one or more of the preceding claims, **characterized in that** it comprises a through cavity formed by said concavity in the direction of said receptacle (7) at said thermistor (10).

9. The sensor according to one or more of the preceding claims, **characterized in that** said main base (2) comprises a second portion (2b) that forms a socket (6) for engagement with connector means.

10. The sensor according to one or more of the preceding claims, **characterized in that** it comprises a covering element (8) that can engage below said main base (2) in order to close it on the side of said receptacle (7).
